# EUROPEAN PATENT APPLICATION

(11) **EP 4 814 706 A1**
(43) Date of publication of application: **30.09.2026**
(21) Application number: 25167151.7
(22) Date of filing: 28.03.2025
(51) Int. Cl.: G06F 8/72, G06F 8/74, G06F 8/75

(54) **METHOD AND SYSTEM FOR IDENTIFYING ARCHITECTURAL COMPONENTS IN LEGACY SOFTWARE**

(71) Applicant: British Telecommunications Public Limited Company, London E1 8EE (GB)
(72) Inventor: NOPPEN, Johannes, London, El 8EE (GB); ZIOLKOWSKI, Adam, London, El 8EE (GB); JOHNS, Jack, London, El 8EE (GB)
(74) Representative: British Telecommunications public limited company Intellectual Property Department

(57) **Abstract**

A method of identifying architectural components in a legacy software system, comprising extracting structural and/or functional relationship between software components from the legacy software system, applying predefined semantic markers derived from historical development data to classify software components, and generating an output indicating the classification for use in system refactoring or migration. A system comprising a processor and a data storage module configured to store source code of the legacy software system, predefined semantic markers, extracted relationships, and classification results, wherein the processor extracts relationships, evaluates them against predefined markers, identifies and classifies software components, and generates an output indicating classified components and their roles. The system facilitates structured analysis of legacy software, applying predefined semantic markers from historical development data to automate classification and role assignment in legacy software systems, improving software migration and refactoring efficiency.

## Description

### FIELD

The present disclosure relates to a method and system for identifying architectural components in a software system.

### BACKGROUND

The maintenance and modernisation of legacy software systems is a critical challenge faced by organisations that rely on long-standing, complex software architectures. As technology evolves, software systems must be updated to ensure continued functionality, maintainability, and compatibility with modern computing environments. However, legacy systems often suffer from inadequate documentation, outdated design structures, and the absence of the original developers, making refactoring and migration to new architectures such as cloud-based microservices, a labour-intensive and error-prone process.

Conventionally, software refactoring and migration rely on manual code analysis to identify core system components and determine their roles within the architecture. Developers and software architects must examine source code, analyse dependencies, and interpret class diagrams to understand the system structure. Tools exist that assist with this process, such as reverse engineering software that generates Unified Modelling Language (UML) diagrams from source code, clustering algorithms that group related elements, and pattern recognition techniques that detect known architectural structures. However, these approaches are inherently limited, as they either provide overly generalised insights that lack context-specific relevance or require significant human intervention to interpret results.

One approach to improving legacy system analysis is the use of pattern mining to detect recurring structures within software codebases. Design pattern miners, for example, can identify well-known object-oriented programming patterns and provide clues about the intended architecture. These methods, however, are difficult to generalise across diverse software ecosystems.

Existing solutions for legacy system analysis suffer from several key limitations. Traditional code analysis methods rely on experts to interpret the results and only provide partial insights that must be manually pieced together. Design pattern miners are restricted to well-known patterns and fail to capture bespoke architectural conventions. Execution-based methods are impractical for static codebases or non-executable legacy systems. As a result, organisations incur high costs and risks when trying to update or restructure legacy software. The process is often slow and complicated, leading to missed deadlines, accumulating inefficient code that makes future updates harder, or, in the worst case, complete project failure.

A problem to be solved is therefore the efficient identification of software components and their architectural roles within a legacy system, without requiring exhaustive manual analysis or reliance on predefined design patterns. Existing approaches fail to generalise across diverse software projects.

The present invention addresses at least the above problems in the known art by providing a novel solution for the identification of architectural components in legacy systems.

### SUMMARY

According to a first aspect there is provided a computer-implemented method as defined in the appended independent method claim. Further preferable features of the first aspect are defined in the appended dependent method claims.

According to a second aspect of the present invention there is provided a system as defined in the appended independent system claim. Further preferable features of the second aspect of the present invention are defined in any appended dependent method claims.

The method of the present invention tends to provide an efficient and structured approach to identifying architectural components within a legacy software system. By leveraging predefined semantic markers derived from historical development data, the method tends to reduce the need for manual code analysis, which is often time-consuming and error-prone. The use of structural and functional relationships for classification may reduce reliance on manual inspection, improving accuracy and scalability across different programming languages and architectures.

The step of extracting at least one structural and/or functional relationship tends to enable the system to apply predefined semantic markers derived from historical data to classify software components based on structural and functional characteristics.

By applying predefined semantic markers, the method tends to classify software components based on recurring patterns in structural and functional characteristics, providing insights into component roles within the system.

A structured approach to identifying recurring structural and functional patterns may reduce manual inspection effort and can ensure that classifications are based on predefined semantic markers derived from historical development data, rather than assumptions based on naming conventions or isolated code structures. The ability to apply predefined semantic markers to classify software components tends to improve classification accuracy, reduce misidentification of architectural roles, and support more precise refactoring decisions.

The predefined semantic markers may be generated using historical development data associated with at least one of a team, a project, and/or a software domain.

The step of applying predefined semantic markers from historical development data tends to enable the system to identify recurring architectural patterns specific to a team, project, or software domain. This can improve classification accuracy by ensuring that the system recognises and applies patterns that reflect real-world software development practices rather than relying solely on generic, predefined rules.

By applying team-specific data, for example, the method can reflect development styles, coding conventions, and architectural preferences unique to a particular group of developers.

This ability to apply historically relevant patterns tends to enable the system to classify software components consistently and ensure that refactoring suggestions align with past design choices and best practices.

Advantageously, each identified software component may be classified based on at least one characteristic selected from the group comprising structural similarity to predefined architectural patterns, functional relationships with other components, frequency of interaction with other components, and/or historical modification trends.

The step of classifying each identified software component based on these characteristics tends to improve the accuracy of classification by considering multiple factors that reflect how a component is structured and how it behaves within the system.

By looking at structural similarity, the system can compare components to known architectural patterns, helping to identify whether a component belongs to a specific role, such as a controller, data handler, or service module. Functional relationships allow the system to determine how components interact, which can help in distinguishing between different layers of an application, such as user interface elements and backend logic.

Analysing interaction frequency can reveal which components are central to system operations, while historical modification trends can highlight components that have been frequently updated or repurposed, giving insights into their importance and stability.

The method disclosed herein may further comprise generating a visual representation of the identified components and their respective classified roles, wherein the visual representation is based on classification results and comprises at least one of a dependency graph, a UML diagram, an architectural heatmap, and/or an annotated source code overlay.

The step of generating a visual representation of the identified components and their classified roles tends to make the system more intuitive and accessible by providing a clear, structured way to interpret classification results. Instead of relying solely on text or numerical outputs, the method can present graphical representations that help developers understand software structure easily.

A dependency graph can show how components interact, making it easier to identify highly coupled elements or potential refactoring opportunities. A UML diagram can represent class structures, sequences, or system interactions, helping developers visualise architectural relationships. An architectural heatmap can highlight critical components, frequently modified areas, or potential bottlenecks. An annotated source code overlay can integrate classification results directly into the source code view, helping developers see role assignments in context.

By offering multiple visual formats, the system tends to improve usability, enhance decision-making, and streamline software modernisation efforts.

By tailoring recommendations to classification results, the method can ensure that refactoring efforts are targeted, efficient, and aligned with best practices, helping organisations modernise legacy systems with greater confidence and lower risk.

The method may further comprise outputting a structured report detailing the classification results, wherein the structured report comprises an analysis of identified components, suggested system improvements, and/or a presentation format selected from a text summary, a graphical visualisation, or a machine-readable data format.

The step of outputting a structured report tends to make the system more practical and usable by providing a clear and organised summary of the classification results and recommended improvements. Instead of requiring developers to manually interpret raw classification data, the method may generate a detailed analysis that can be used for decision-making and implementation.

The structured report which may be generated by the method may include an analysis of identified components, helping developers understand the architectural structure of the system. It can also provide suggested system improvements, such as outputting classification results that support refactoring decisions.

To support different use cases, the report can be presented as a text summary for manual review, a graphical visualisation for intuitive interpretation, or a machine-readable format (such as JSON or XML) for integration into automated workflows. This flexibility tends to make the method more adaptable and scalable across various development environments.

The method may further comprise retrieving historical modifications to analyse past software structures and coding patterns. This analysis may be used to identify recurring modification trends and apply predefined semantic markers to classify components based on past development practices and architectural changes.

By applying predefined semantic markers derived from historical development data, the system can classify software components based on recurring structural and functional characteristics observed in past projects. This allows the system to apply predefined semantic markers more effectively, ensuring that classifications align with previous architectural decisions.

The method may further comprise the step of detecting recurring development patterns that are specific to a team, a project, or a combination thereof, wherein the detected patterns are used to improve the accuracy of component classification.

By analysing patterns specific to a team, the system can account for coding styles, architectural preferences, and naming conventions that influence how components are designed and function. Identifying project-specific patterns enables the system to detect common frameworks, design templates, or domain-specific architectures unique to that software system.

This ability to apply historical team and project patterns tends to improve classification accuracy.

The system configured to identify architectural components in a legacy software system tends to provide an automated and structured approach to software analysis and modernisation. By integrating a processor and a data storage module, the system can extract, classify, and output structured insights to support refactoring and migration efforts.

The processor may be responsible for extracting structural and functional relationships from source code and data flows. By applying predefined semantic markers derived from historical development data, the system classifies software components based on previously identified patterns.

The data storage module retains historical software patterns, extracted relationships, and classification results, ensuring the system can apply predefined semantic markers consistently across different software architectures.

The system may generate structured outputs, such as classification visualisations, structured classification reports, and machine-readable reports, which can help software teams better understand the existing system, identify refactoring opportunities, and streamline migration to modern architectures. This structured approach tends to make legacy system modernisation more efficient, scalable, and data-driven.

A data processing system may be configured to perform the methods disclosed herein.

A computer program may be provided comprising instructions which, when the program is executed by a computer, cause the computer to carry out the method disclosed herein. Furthermore, a computer-readable data carrier may be provided having stored thereon said computer program. A data carrier signal may also be provided carrying said computer program.

More specifically, aspects of the present invention relate to a computer-implemented method of identifying architectural components in a legacy software system using predefined semantic markers, a data processing system configured to perform such a method, a computer program comprising instructions which, when the program is executed by a computer, cause the computer to carry out such a method, a computer-readable data carrier having such a computer program stored thereon, and a data carrier signal carrying such a computer program.

The method may comprise analysing the source code of a legacy software system to extract structural and functional characteristics, comparing the extracted characteristics to predefined semantic markers derived from historical development data, identifying software components that match the learned markers, classifying the identified components, and generating an output indicative of the classified components for use in system refactoring or migration.

The data processing system may be configured to apply machine learning techniques to derive semantic markers from historical development data, store and update a repository of semantic markers, perform automated pattern recognition on legacy software systems, and output role classifications to assist in migration or modernisation efforts.

The computer program, when executed, may cause a computer to perform code analysis, execute predefined pattern matching, classify software components, and generate structured outputs for refactoring and migration.

The computer-readable data carrier may store the computer program, allowing for deployment in legacy system analysis tools, automated refactoring frameworks, or enterprise software maintenance environments.

The data carrier signal may carry the computer program over a network, facilitating distributed execution or integration with cloud-based software development and migration platforms.

### BRIEF DESCRIPTION OF THE FIGURES

Aspects of the present disclosure will now be described by way of example with reference to the accompanying figures. In the figures:
Figure 1 illustrates a data processing workflow for identifying architectural roles of software components in a legacy system using predefined semantic markers derived from historical development data according to the present invention; and
Figure 2 illustrates a data processing workflow for integrating predefined semantic markers into the traditional legacy system refactoring process according to the present invention;
Figure 3 is a flow diagram of a method for identifying at least one architectural component in a legacy software system according to the present invention; and
Figure 4 is a schematic diagram of a computer in which a legacy system analysis and classification tool according to the present invention is deployed in some cases.

### DETAILED DESCRIPTION

The present invention relates to a method and system for identifying architectural components in a legacy software system using predefined semantic markers derived from historical development data. The invention addresses the challenge of understanding the structure and function of legacy codebases, particularly in the context of modernisation and migration efforts.

A core challenge in working with legacy software is understanding its constituent parts without extensive documentation or access to the original developers. The invention addresses this by augmenting legacy system analysis tools with the ability to recognise patterns derived from historical development data. By examining team-specific or project-specific development styles, the system applies predefined semantic markers to identify recurring software structures and their associated architectural roles.

By extracting structural and functional relationships from the source code, the method and system applies predefined semantic markers to classify software components based on historical development data. This enables a structured and systematic approach to software analysis, reducing the need for extensive manual inspection and subjective decision-making.

The invention may employ graph-based pattern matching techniques to identify recurring structures within software architecture. It may apply predefined team or project-specific architectural patterns, derived from historical development data, to assist in component classification and role identification.

Additionally, the invention may support retrieving historical modifications to improve component classification by using past development patterns and structural changes, facilitating improved software refactoring, transformation, and migration.

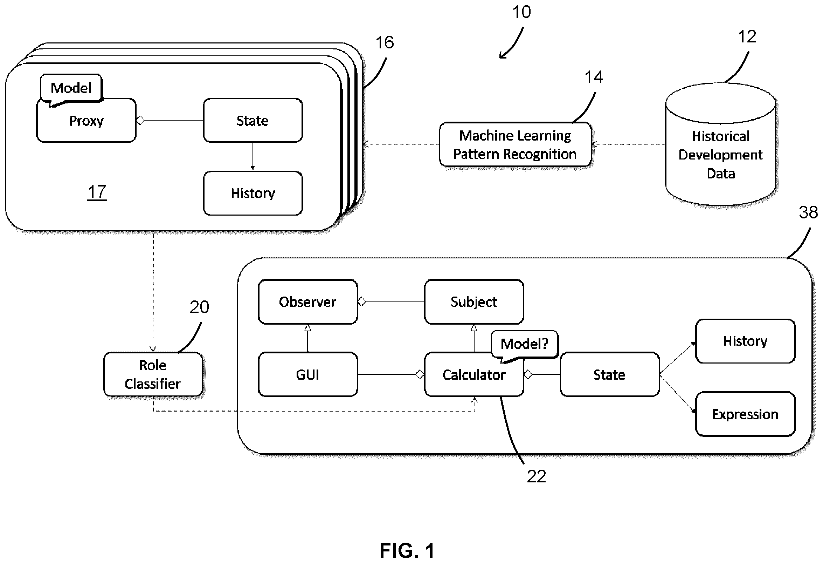

Referring firstly to Figure 1, a data processing workflow 10 for identifying architectural roles of software components in a legacy system is shown. The workflow comprises:
- a historical development data store 12 that contains recorded software structures and patterns extracted from past projects or team-specific coding practices.
- a pattern recognition module 14 that applies stored semantic markers derived from historical development data, enabling automated classification of software components.
- a set of predefined semantic markers 16 representing team-specific or project-specific patterns 17.
- a role classifier 20 that applies semantic markers 16 to software components within the legacy software system, identifying components that match known patterns.

These predefined semantic markers 16 encode patterns 17 of software structure and behaviour, derived from historical projects and team coding practices. The patterns 17 are applied to a legacy software system, where components lack explicit semantic role definitions.

A role classifier 20 applies predefined semantic markers 16 to system components, comparing extracted characteristics to stored historical development data 12. As shown in Figure 1, the system analyses software components such as a calculator module 22 using predefined classification patterns to determine their role within the legacy system.

A pattern matching module (not shown) identifies similarities between legacy software components and historical patterns, enabling the detection of functionally related elements. A role classifier assignment module (also not shown) determines the likely architectural role of each identified component based on its structural and functional relationships.

Although Figure 1 does not explicitly show the pattern matching module or role assignment module, these components function within or immediately after the role classifier 20. The pattern matching module operates between the pattern recognition module 14 and the role classifier 20 and compares extracted structural and functional relationships against predefined semantic markers 16. The role assignment module follows the pattern matching process and assigns predefined architectural roles to matched components.

This approach provides a structured and scalable method for analysing software architectures, ensuring that legacy systems can be modernised efficiently and with reduced manual effort.

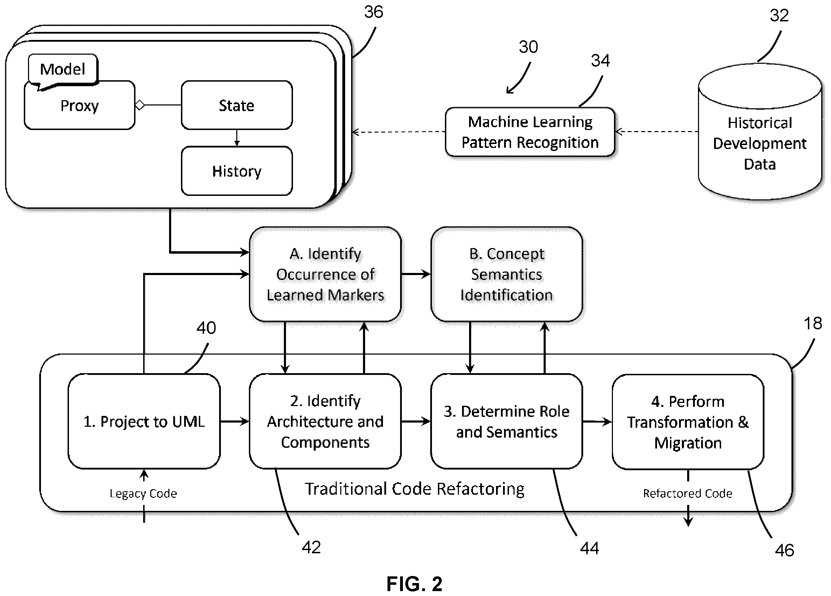

Referring now to Figure 2, a data processing workflow 30 for integrating predefined semantic markers into a traditional legacy system refactoring process is shown. The figure builds on Figure 1 by illustrating how the identified architectural roles of software components, determined using predefined markers, contribute to improving the refactoring and migration of a legacy software system.

A first component, a historical development data store 32, provides past software structures and coding patterns. This data is processed by a predefined pattern recognition module 34, which applies stored team or project specific semantic markers to identify recurring patterns characteristic of architectural roles. The output of this process is a set of predefined semantic markers 36, which define common structural relationships and their associated roles. These markers are used to supplement the identification and classification of architectural components in a legacy system, as described with reference to Figure 1.

The invention enhances a traditional refactoring process 38 (see figure 1) by classifying software components using predefined semantic markers derived from historical development data. A UML projection module 40 may be used to generate UML diagrams to aid in understanding the system's structure. The system applies predefined semantic markers to classify software components based on recurring structural and functional patterns, assisting in the identification of related architectural elements. This classification process supports refactoring decisions by enabling a structured understanding of the system's existing architecture and potential areas for modification.

A role and semantics determination module 44, classifies identified components into predefined architectural roles. Traditionally, this is performed manually, relying on expert judgment to classify components as user interface elements, business logic components, or data storage components. The present invention improves this step by incorporating a semantic marker detection module (not shown in Figure 2), which searches for predefined patterns within the legacy system, and a role inference module (also not shown in Figure 2), which assigns predefined architectural roles based on structural and functional similarities to known patterns.

Although not shown in Figure 2, the semantic marker detection module operates before or within the step of "Identify Architecture and Components" (i.e. the component identification module 42) to detect patterns within the legacy software system.

The role inference module functions within or immediately after the step of "Determine Role and Semantics" (i.e. the semantics determination module 44) to assign predefined architectural roles to components based on detected patterns.

The final stage, a transformation and migration module 46, applies refactoring techniques to restructure the codebase, enabling a transition to a modern software architecture. The role classification insights from Figure 1 directly inform this transformation, ensuring that functionally related components are preserved and correctly mapped during migration.

By integrating predefined semantic markers into the refactoring workflow, the present invention enhances the efficiency of legacy system transformation by reducing manual intervention and enabling a structured and automated migration process.

The process of deriving predefined semantic markers begins with historical development data. This data is processed using pattern recognition techniques to identify recurring component structures and functional relationships. The resulting semantic markers are stored in a structured format, allowing efficient lookup and comparison against components within a legacy system.

The markers reflect higher-level architectural knowledge, capturing relationships between components rather than isolated code structures. These patterns may define how a particular type of component, such as a data repository, processing unit, or UI handler, typically interacts with other components.

When analysing a legacy software system, the predefined semantic markers are retrieved and compared against the system's source code representation to determine if any known patterns exist. This comparison is achieved using graph-based pattern matching, which detects occurrences of stored patterns within the system's architecture.

Once software components are classified into predefined architectural roles, the system can output classification results that support refactoring decisions based on these classifications in the form of recommendations. Recommendations may be derived from:
- Best practices for modularisation, such as breaking down monolithic services into microservices.
- Dependency restructuring, including decoupling tightly integrated components to improve maintainability.
- Migration strategies, such as replacing outdated frameworks while preserving functionality.

By using predefined semantic markers, the system provides a structured, history-driven approach to software analysis and migration, ensuring that legacy software can be modernised effectively while preserving its original architectural intent.

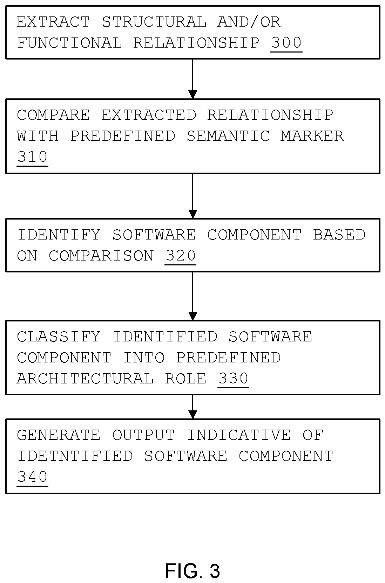

Referring now to Figure 3, a flow diagram of a method for identifying at least one architectural component in a legacy software system is shown. The method is performed by a system configured to analyse and classify software components, supporting migration, maintenance, or refactoring of source code.

At step 300, the method comprises extracting at least one structural and/or functional relationship between software components from the legacy software system. This extraction enables the system to capture dependencies, interactions, or patterns within the source code that provide insights into software architecture.

At step 310, the method further comprises comparing the extracted relationship with at least one predefined semantic marker. The predefined semantic marker represents a pattern derived from historical development data, allowing for structured classification of software components based on prior coding practices, team conventions, or domain-specific structures.

At step 320, the method comprises identifying at least one software component within the legacy software system based on the comparison with the at least one predefined semantic marker. This identification step determines which software components exhibit characteristics that match predefined architectural patterns.

At step 330, the method comprises classifying the at least one identified software component into a predefined architectural role. The classification is performed based on the extracted structural and/or functional relationship of the identified software component to at least one other component of the legacy software system, wherein the classification is determined in accordance with the at least one predefined semantic marker.

At step 340, the method comprises generating an output indicative of the at least one identified software component. This output provides insights into the architectural role of the classified component, facilitating further processing such as refactoring, documentation enhancement, or system migration planning.

This method provides a structured approach to analysing legacy software systems, leveraging predefined semantic markers derived from historical development data to improve component classification accuracy and support modernisation efforts.

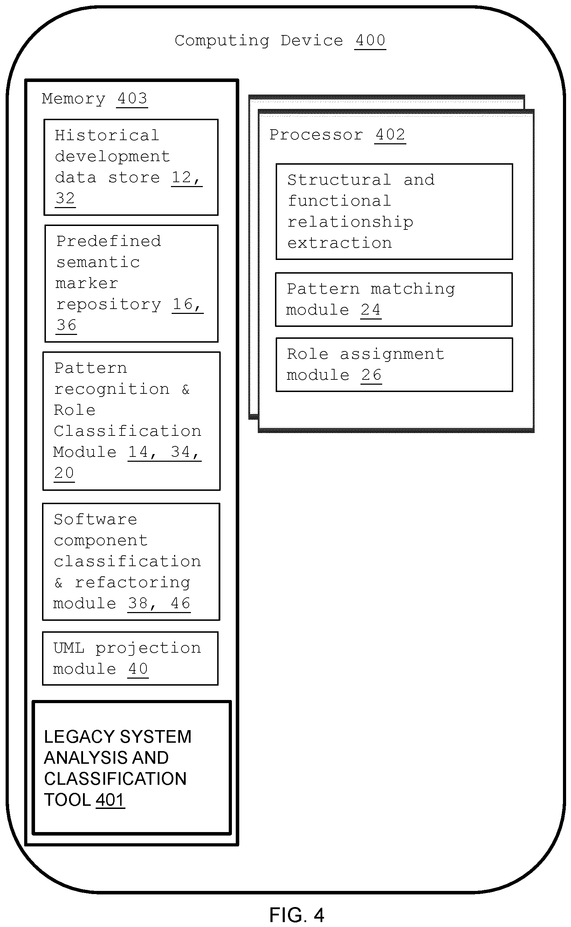

Referring to Figure 4, a computing device 400 in accordance with the present invention is shown, which is configured to identify and classify architectural components within a legacy software system using predefined semantic markers derived from historical development data. The computing device 400 comprises a memory 403 and a processor 402, which together facilitate the extraction, comparison, classification, and refactoring of software components.

The memory 403 stores various modules and data structures for the classification and migration of legacy software components. A historical development data store 12, 32 retains recorded software structures, coding patterns, and development styles derived from past projects. A predefined semantic marker repository 16, 36 contains learned patterns extracted from historical data, which are used to identify architectural roles of software components. The pattern recognition and role classification module 14, 34, 20 applies these predefined semantic markers to software components within the legacy system, enabling automated classification based on structural and functional relationships. The software component classification and refactoring module 38, 46 assists in restructuring the legacy system by refining component classification and supporting migration efforts. Additionally, a UML projection module 40 generates UML diagrams or other visual representations to aid in understanding the classified software components and their roles within the system. A legacy system analysis and classification tool 401 provides an overarching framework for executing classification and migration processes.

The processor 402 is configured to execute several functions related to the analysis and classification of software components. It performs structural and functional relationship extraction, analysing the legacy software system to determine interactions and dependencies among software components. A pattern matching module 24 compares extracted characteristics against predefined semantic markers to detect structural and functional similarities, while a role assignment module 26 assigns predefined architectural roles to matched components based on their relationships and functional context.

By integrating these components, the computing device 400 enables a structured and automated approach to analysing and refactoring legacy software systems.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

The terms "top", "bottom", "side", "front", "back", "forward", "rear", "clockwise", "anticlockwise" and other terms describing the orientation of features are not intended to be limiting and, where used, are purely included in order to facilitate the description of the relative location of these features in the context of the accompanying drawings. In use, or during storage, the features may be disposed in other orientations.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Resources/computing resources, as referred to herein, comprise time, electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein may comprise at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method of identifying at least one architectural component in a legacy software system, the method comprising the steps of:
extracting at least one structural and/or functional relationship between software components from the legacy software system;
comparing the at least one extracted relationship with at least one predefined semantic marker, wherein the at least one predefined semantic marker represents a pattern derived from historical development data;
identifying at least one software component within the legacy software system based on the comparison with the at least one predefined semantic marker;
classifying the at least one identified software component into a predefined architectural role based on the structural and/or functional relationship of the identified software component to at least one other component of the legacy software system, wherein the classification is determined in accordance with the at least one predefined semantic marker; and
generating an output indicative of the at least one identified software component.

2. The method according to claim 1, wherein the step of extracting at least one structural and/or functional relationship comprises identifying one or more relationships between at least one software component and at least one other software component, wherein the classification is performed by evaluating the extracted structural and/or functional relationships against predefined semantic markers derived from historical development data, wherein the predefined semantic markers define patterns used to determine the architectural roles of software components.

3. The method according to claim 1 or claim 2, wherein the predefined semantic markers are generated using historical development data associated with at least one of a team, a project, and/or a software domain.

4. The method according to any of the preceding claims, wherein each identified software component is classified based on at least one characteristic selected from the group comprising:
structural similarity to predefined architectural patterns,
functional relationships with other software components,
frequency of interaction with other software components, and/or historical modification trends.

5. The method according to claim 4, wherein a classification module is configured to compare extracted structural and/or functional relationships of a software component against predefined semantic markers to determine a predefined architectural role of the software component.

6. The method according to any of the preceding claims, further comprising generating a visual representation of the identified components and their respective classified roles, wherein the visual representation is based on classification results and comprises at least one of:
a dependency graph,
a UML diagram;
an architectural heatmap, and/or
an annotated source code overlay.

7. The method according to any of the preceding claims, further comprising outputting classification results.

8. The method according to any of the preceding claims, further comprising outputting a structured report detailing the classification results, wherein the structured report comprises:
an analysis of identified components,
suggested system improvements, and/or
a presentation format selected from a text summary, a graphical visualisation, or a machine-readable data format.

9. The method according to any of the preceding claims, further comprising retrieving historical development data and processing the historical development data to generate predefined semantic markers.

10. The method according to any of the preceding claims, further comprising refining the identification of software components by detecting recurring development patterns that are specific to a team, a project, or a combination thereof, wherein the detected patterns are used to improve the accuracy of component identification.

11. A computer system configured to identify at least one architectural component in a legacy software system, the system comprising:
a processor; and
a data storage module configured to store:
at least one extracted structural and/or functional relationship; and
at least one of:
source code of the legacy software system,
a predefined semantic marker derived from historical development data, and
an output indicative of an identified software component and its association with at least one predefined semantic marker;
wherein the processor is configured to:
extract at least one structural and/or functional relationship between software components from the legacy software system;
compare the at least one extracted relationship against at least one predefined semantic marker,
identify at least one software component within the legacy software systems based on the comparison with the at least one predefined semantic marker;
classify the at least one identified software component into a predefined architectural role based on the structural and/or functional relationship of the identified software component to at least one other component of the legacy software system and to the at least one predefined semantic marker; and
generate an output indicative of the at least one identified software component.

12. A computer program comprising instructions which, when the program is executed by a computer, cause the computer to carry out the method of any of claims 1 to 10.

13. A computer-readable data carrier having stored thereon the computer program of claim 12.
